# EUROPÄISCHE PATENTSCHRIFT

(11) **EP 2 826 361 B1**
(45) Veröffentlichungstag und Bekanntmachung des Hinweises auf die Patenterteilung: **08.06.2016**
(21) Anmeldenummer: 14002474.6
(22) Anmeldetag: 17.07.2014
(51) Int. Cl.: A01G 13/00

(54) **Verbindungssystem mittels Reissverschluss für Hagelschutznetze und ähnlichen Abdeckungen sowie Montageverfahren zur Erstellung der Abdeckungsanlagen**
Zip-based connection system for hail protection nets and similar covers and assembly method for laying on the cover installations
Système de connexion à fermeture éclair pour des filets anti-grêle et couvertures analogues et procédé de montage pour la mise en place des installations de couverture

(30) Priorität: 18.07.2013 IT BZ20130036
(43) Veröffentlichungstag der Anmeldung: 21.01.2015
(73) Patentinhaber: Gallmetzer, Georg, 39040 Auer (BZ) (IT); Kloberdanz, Martin, 39040 Margreid (BZ) (IT); Vorhauser, Christian, 39040 Margreid (BZ) (IT)
(72) Erfinder: Gallmetzer, Georg, 39040 Auer (BZ) (IT); Kloberdanz, Martin, 39040 Margreid (BZ) (IT); Vorhauser, Christian, 39040 Margreid (BZ) (IT)
(74) Vertreter: Oberosler, Ludwig

(56) Entgegenhaltungen:
- EP-A1- 1 417 881
- DE-C2- 3 527 895
- US-A- 6 164 227

## Beschreibung

In der Land- und Gartenwirtschaft ist der Einsatz von Reißverschlüssen zur Verbindung von Schutzabdeckungen oder Hagelschutznetzen bekannt.

Insbesondere die Hagelschutznetze sind auf einer Struktur aufgebaut welche aus senkrechten Pfählen und gespannten Drähten besteht. Üblicherweise sind die Bahnen aus Netzgewebe parallel zu den Pflanzenreihen angebracht um, im ausgebreiteten Zustand, gleich einer geneigten Dachfläche oder in einer flachen eventuell dem Gelände angepassten Stellung, eine Schutzstellung einzunehmen. Üblicherweise sind die Längswebkanten der genannten Bahnen an die Struktur der gespannten Metalldrähte befestigt welche über die oberen Enden der senkrechten Stützpfähle verlaufen welche im Bereich der Pflanzenreihen positioniert sind und eventuell auch als Stützstruktur für die Pflanzen dienen.

Es sind unterschiedliche Systeme bekannt um das Reißen der Netze im Falle von Hagel, welcher durch Ablagerung auf den Netzen oder den Abdeckungen ein beachtliches Gewicht erreichen kann, zu verhindern. Eines der bekannten Systeme besteht in einer Verbindung der Webkanten mittels Kunststoffplaketten welche, zueinander beabstandet, so angebracht sind, dass die Entladung des Hagels in Richtung Boden durch die nicht verbundenen Bereiche der Netze möglich ist, ohne dabei den Schutz der Pflanzen zu beeinträchtigen. Die Praxis hat gezeigt, dass die vom Netz zurückgehaltenen Hagelkörner, durch ihren gegenseitigen Kontakt, häufig unter sich zusammenfrieren und Schichten oder Platten bilden welche kaum auf dem Netz gleiten um in Richtung Boden entladen zu werden. Weiters hängen die besagten Plaketten öfters nicht beim Erreichen eines bestimmten Grenzwertes des Gewichtes aus, was zu einer konzentrierten Belastung an den Befestigungspunkten der Verbindungsplaketten und somit zum Reißen des Netzes oder zu einer Verkürzung der Lebensdauer des Netzes, führt. Diese Fakten können zu derart hohen Belastungen an den Netzen führen dass, außer an den Netzen, auch Beschädigungen an der Stützstruktur mit beträchtlichen Schäden an der Anlage und an den Pflanzungen, verursacht werden. Die besagten Verbindungsplaketten führen weiters dazu, dass sich die Netze in den Bereichen zwischen den Plaketten beachtlich unter Belastung verformen so dass bedeutende Öffnungen entstehen durch welche der vom Wind beeinflusste Hagel, durch Querschlag die Pflanzungen beschädigen kann.

Aufgrund der Erfahrungen ist das System der Verbindung mittels Reißverschluss entwickelt worden. Diese bekannte Verbindungsart hält die seitlichen Webkanten der einzelnen Netze, ohne Unterbrechung, zusammen, wobei erreicht wird dass, bei Hagel, die Belastungen möglichst gleichmäßig durch Punktlastumformung in Flächenlast, auf die Netze und auf die Stützstruktur verteilt werden um Beschädigungen, Verformungen und Brüche zu verhindern und auch Schäden durch Hagel welcher durch die offenen Bereiche zwischen den Plaketten dringt, zu vermeiden.

DE 3 527 895 C2 offenbart eine Vorrichtung zum Einarbeiten eines Reißverschlusses mittels verdeckter Nähnaht im Bereich der Kanten von zwei Stoffbahnen.

Das bekannte Vernähen zwischen der Webkante der Netze und dem Band des Reißverschlusses erfolgt, nachdem der äußerste Rand des Bandes über den äußersten Rand der Webkante gelegt wird so dass, wenn das Netz unter Zugbelastung quer zur Längskante ist, einer der äußersten Ränder nach oben absteht und das eventuelle Abrutschen des Hagels behindert, während der andere Rand nach unten absteht; der Nähfaden ist sehr den Sonnenstrahlen und einer Scherbelastung, infolge gegenseitigem Gleiten zwischen Band des Reißverschlusses und Webkante, ausgesetzt.

Dieses System ist mit folgenden Nachteilen behaftet:
- die Naht zwischen Netz und Reißverschluss ist einer Scherbelastung ausgesetzt und stellt dadurch die Schwachstelle der Anlage dar;
- im Fall eines Aufrollens oder Raffens der Netze zwecks Einnahme der kompakten, nicht aktiven Position, verhängen sich die Krampen des Reißverschlusses in den Maschen des Netzes und beschädigen dieses sobald es wieder ausgelegt wird;

- im Fall starker Hagelschläge kann die Belastung an der Stützstruktur und/oder an den Netzen zu hoch sein und Brüche verursachen;
- das freie Gleiten des Hagels wird durch einen der nach oben abstehenden Ränder an der Naht behindert;
- die Verteilung der Belastungen in den Bereichen welche höherem Zug ausgesetzt sind erfolgt nicht ausreichend gleichmäßig um Bereiche zu schaffen wo Veränderungen der Zugbelastung elastisch aufgenommen werden;
- das vollständige Schließen der Reißverschlüsse ist öfters problematisch weil die Netze Spannungen welche, nach Montage und Befestigung an der Stützstruktur auftreten, nicht großflächig verteilen und ausgleichen können.

Die Erfindung stellt sich die Aufgabe ein Verbindungssystem zwischen Hagelschutznetzen mit Reißverschluss sowie ein Montageverfahren zu schaffen, wobei die Verbindung zwischen der Webkante des Netzes und dem Band des Reißverschlusses belastbarer und länger haltbar gestaltet ist, wobei ein eventuelles Entladen des Hagels, ohne Auftreten von Bereichen mit übertriebener Konzentration der Belastung an den Netzen, ermöglicht wird, ein Beschädigen des Netzes durch die Krampen des Reißverschlusses ausgeschlossen wird und ein hemmungsfreies Schließen und Öffnen der Reißverschlüsse gesichert ist.

Zur Lösung dieser Aufgabe schlägt die Erfindung vor, dass an Anlagen, wo keine Unterbrechung an den Nähten, zwecks Bildung von Durchlässen zur Entladung des Hagels vorgesehen sind, die Befestigung des Bandes des Reißverschlusses an der Längswebkante des Netzes, so ausgeführt wird, dass das Band über der Webkante liegt, so dass der Rand ohne Krampen parallel zum äußersten freien Rand der Webkante des Netzes und nahe an diesem Rand liegt. Erfindungsgemäß erfolgt die Befestigung über eine erste Heftnaht, z.B. eine 2-Faden Kettelnaht, und eine zusätzliche Überwendlingsnaht, z.B. mit 3 Fäden. Die Überwendlingsnaht hat im Fall des Reißens einer der Fäden eine sichernde Wirkung und verhindert, dass die Naht bei hohen Belastungen aufgeht. Auf diese Weise werden sich im Verbindungsbereich der Netze, unter Zugbelastung, die beiden, durch Überwendlingsnaht zusammengehaltenen, äußersten Ränder der Webkante und die freien äußersten Ränder der Bänder des Reißverschlusses, zueinander parallel nach unten ausrichten und die Fäden der Kettelnaht werden, in jedem Punkt der Naht, einer Zugbelastung ausgesetzt sein, wodurch eine größere Widerstandsfähigkeit und auch eine längere Lebensdauer gesichert ist. Durch die Ausrichtung der äußersten Ränder der Webkanten und der Bänder nach unten (bei Netzen unter Zugbelastung), befinden sich die Fäden der Nähte in einem geschützten Bereich und sind somit weniger dem Alterungsprozess durch Sonneneinstrahlung ausgesetzt.

Um eine bessere Verteilung der Belastungen welche auf die, über Reißverschlüsse, verbundenen Netze wirken, zu erreichen, schlägt die Erfindung vor, dass die Bänder der Reißverschlüsse und/oder die Webkanten der Netze aus elastischem Gewebe hergestellt sein können, wobei erreicht wird dass, außer der Verteilung und der Abschwächung der Belastungsspitzenwerte, auch eine Anordnung der Netze ohne Bildung von Falten und durchhängender Bereiche, welche das freie Gleiten des Hagels behindern würden, erfolgt. Dieses erfindungsgemäße Merkmal kann zusätzlich optimiert werden indem vorgesehen wird, dass die Bänder der Reißverschlüsse und/oder die Webkanten von gummierter Art sind oder über ein Band aus elastischem Werkstoff verbunden sind. Die Verbindung mit diesem elastischen oder gummiartigem Band bewirkt den dichten Einschluss der Fäden der Nähte, wodurch deren Lebensdauer erhöht wird. Außerdem wird durch dieses elastische Band, in Kombination mit dem anzunähenden Netz ein gleitender Kraftschluss zwischen Reißverschluss und Netz, bedingt durch verschiedene e-Module der Werkstoffe, geschaffen.

Um zu vermeiden, dass die Krampen des Reißverschlusses sich in den Maschen des Netzes, wenn dieses aufgerollt oder gerafft wird, verhängen, schlägt die Erfindung vor, dass beim Vernähen, das Band des Reißverschlusses, zusammen mit der Reihe von Krampen, vollständig von einem Abdeckband aus Gewebe oder aus Laminat abgedeckt ist. Erfindungsgemäß kann die Abdeckung der Reihe von Krampen des Reißverschlusses auch dadurch erreicht werden, dass das Band des Reißverschlusses übereinandergefaltet wird so dass die Krampen überdeckt werden; in diesem Fall muss natürlich das Band des Reißverschlusses die nötige Breite aufweisen. Gemäß einer zusätzlichen Variante, können die Krampen des Reißverschlusses durch die zusammengefaltete Webkante des Netzes abgedeckt werden, wobei das Band, zusammen mit den Krampen des Reißverschlusses, innerhalb der besagten Falte enthalten ist.

Um das Entladen des Hagels zu sichern, sieht die Erfindung vor, dass die Webkante des Netzes nur stellenweise an das Band des Reißverschlusses genäht ist so dass auf jeden Fall beachtliche Verbindungsbereiche mit einer ausreichenden Verteilung der Belastungen erhalten werden welche mit Bereichen abwechseln, wo die Webkante des Netzes nicht am Reißverschluss befestigt ist und sich somit, unter dem eventuellen Gewicht des Hagels so verformen kann, dass dieser in Richtung Boden abgeladen wird. Die besagten Unterbrechungen der Naht können an nur einem oder an beiden Bändern des Reißverschlusses, in zueinander entsprechender oder in versetzter Position, durchgeführt werden.

Im Fall der Abdeckung der Reihe der Krampen des Reißverschlusses mittels anliegendem Band oder Laminat oder mittels zusammengefaltetem Band oder zusammengefalteter Webkante, erreicht man zusätzlich den Vorteil, dass die Krampen aus Kunststoff, an der nach unten gerichteten Seite, gegen die für den Pflanzenschutz eingesetzten Chemikalien geschützt sind.

Gemäß einer vorteilhaften Weiterentwicklung des Erfindungsgedankens wird vorgeschlagen, dass an jener Seite des Reißverschlusses, an welcher Entladungsöffnungen zwischen der Webkante und dem Band des Reißverschlusses vorgesehen sind, welche durch eine Unterbrechung der Nähte entstehen, die Verbindung zwischen Webkante und Band des Reißverschlusses durch zwei parallele Kettelnähte erfolgt. Dabei überlappt das Band des Reißverschlusses den Randbereich der Webkante und es wird die erste, den Krampen des Reißverschlusses abgewandte Naht als Heftnaht und Führungsnaht ausgeführt um die korrekte und faltenfreie Position des Bandes zur Webkante zu sichern; die dazu parallele zweite Naht ist den Krampen des Reißverschlusses zugewandt und ist die vorwiegend tragende Naht. Beide genannten Nähte werden erfindungsgemäß an ihren jeweiligen Enden durch mindestens eine Quernaht gegen selbsttätiges Aufgehen gesichert. An den nahtfreien Strecken kann sich das Netz ohne Behinderung, unter Belastung durch Hagel, nach unten verformen und der Hagel kann ohne Behinderung in Richtung Boden gleiten.

Die Erfindung wird, anhand eines, in den beigelegten Zeichnungen schematisch dargestellten, vorzuziehenden Ausführungsbeispieles einer erfindungsgemäßen Verbindung von Hagelschutznetzen durch Reißverschluss näher erklärt, dabei erfüllen die Zeichnungen nur erklärenden, nicht begrenzenden, Zweck.

Die Fg. 1 zeigt in perspektivischer Darstellung einen Teil eines Hagelschutznetzes mit Längswebkante an welcher, mittels Nähte, das Band eines Reißverschlusses so angebracht ist, dass der äußerste Rand des Bandes mit dem äußersten Rand der Webkante des Netzes zusammenfällt.

Die Fig. 2 zeigt in perspektivischer Darstellung einen Teil eines Hagelschutznetzes mit dem angebrachten Band des Reißverschlusses in der, nach Zugbelastung in Querrichtung zu den Nähten welche das Netz mit dem Band des Reißverschlusses verbindet, eingenommenen Position.

Die Fig. 3 zeigt im Querschnitt die Position des Bandes eines Reißverschlusses während des Vernähens oder in Abwesenheit von Belastungen, eingefügt zwischen der Webkante des Hagelschutznetzes und einem Abdeckband.

Die Fig. 4 zeigt im Querschnitt die Position des Bandes eines Reißverschlusses während des Vernähens oder in Abwesenheit von Belastungen, eingefügt zwischen der Webkante des Hagelschutznetzes und einem Teil des gefalteten Bandes.

Die Fig. 5 zeigt im Querschnitt die Position des Bandes des Reißverschlusses während des Vernähens oder in Abwesenheit von Belastungen, eingefügt zwischen der Webkante des Hagelschutznetzes und einem gefalteten Streifen der selben Webkante.

Die Fig. 6 zeigt in Perspektive zwei Bahnen von Hagelschutznetzen welche durch einen Reißverschluss verbunden sind, dabei ist die Webkante des rechten Netzes über Strecken mit dem Band des Reißverschlusses vernäht während an den dazwischen liegenden Strecken die Webkante sich frei verformen kann um den eventuellen Hagel in Richtung Boden zu entladen.

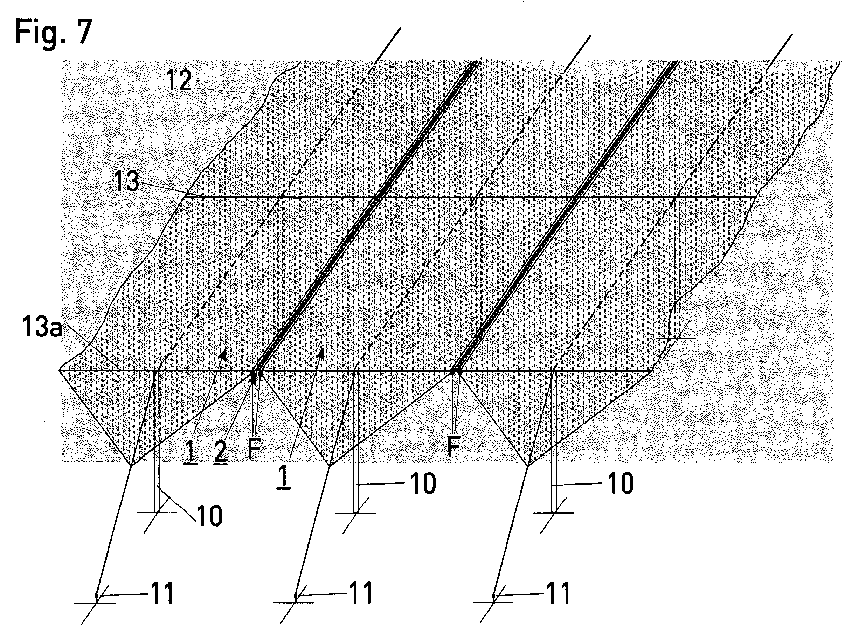

Die Fig. 7 zeigt in Perspektive ein Detail einer Abdeckanlage, ohne Kennzeichnung der nicht vernähten Bereiche für die Entladung des Hagels.

Die Fig. 8 zeigt in Perspektive ein Detail einer Abdeckanlage in Hanglage, mit Kennzeichnung der nicht vernähten Bereiche für die Entladung des Hagels.

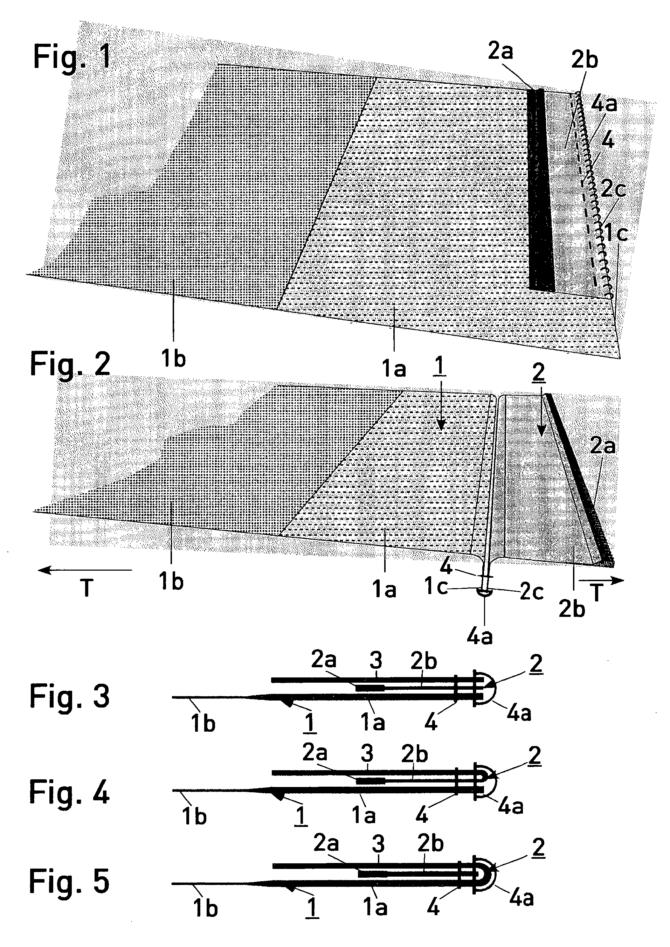

Das Hagelschutznetz 1 bekannter Art, besteht aus einem Netzgewebe 1 b mit einer Längswebkante 1 a aus festerem und stärkerem, elastischem, eventuell gummiertem Gewebe. Entlang der Längswebkanten 1a des linken Netzes 1 werden, mittels Nähte 4, 4a eines der elastischen, eventuell gummierten Bänder 2b eines Reißverschlusses 2 befestigt, wobei eines dieser Bänder so ausgerichtet ist, dass der äußerste Längsrand 2c des Bandes, welcher frei von Krampen 2a ist, wesentlich mit dem äußersten Längsrand 1 c der Webkante 1a des darunter angeordneten Hagelschutznetzes zusammenfällt (Fig. 1). Zwecks exakter Positionierung und faltenloser Anbringung, wird zuerst die Naht 4 als Heftnaht ausgeführt und anschließend die Naht 4a als 3-Fäden Überwendlingsnaht angebracht welche, sollte einer der Fäden reißen, selbsthemmend die Naht gegen Aufgehen sichert.

Durch diese Ausführung der Nähte 4 und 4a wird erreicht, dass bei verbundenen und unter Zugbelastung T, quer zum Verlauf der Nähte 4 und 4a (Fig. 2, 5), stehenden Netzen 1, sich der äußerste Längsrand 1 c der Webkante 1 a und der äußerste Längsrand 2c des Bandes 2b des Reißverschlusses 2 nach unten abstehend, ausrichten, wobei die dazwischen angeordnete Naht 4 und die Überwendlingsnaht 4a bei aktiven ausgebreiteten Netzen gegen die Sonneneinstrahlung abgedeckt sind und so angeordnet sind, dass die Fäden der Nähte auf Zug beansprucht sind. Diese Anordnung der Nähte 4, 4a ermöglicht das unbehinderte Gleiten des Hagels über den Verbindungsbereich zwischen Netz und Reißverschluss hinweg.

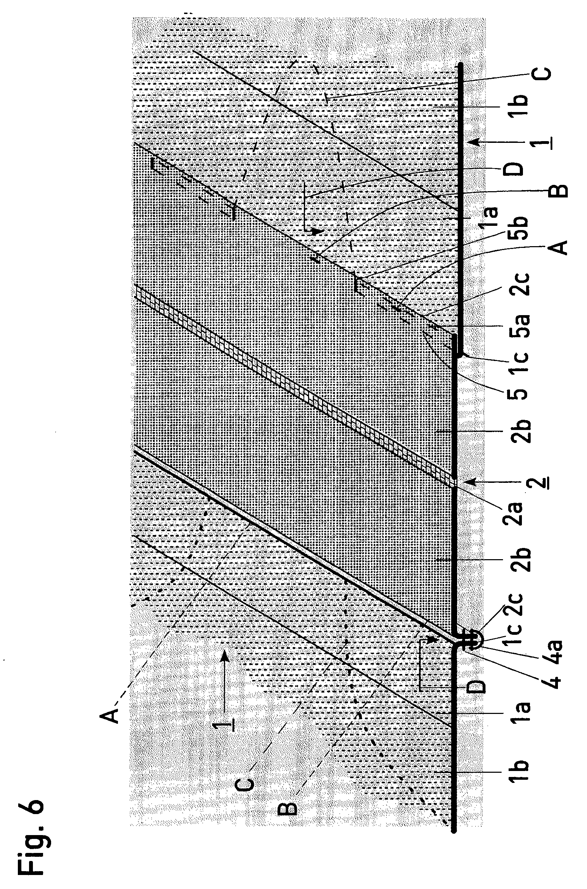

Insbesondere im Fall, dass die Netze geneigt verlaufen, wie z.B. an Hängen oder wenn diese wie geneigte Dachflächen angeordnet sind, können die Nähte 4, 4a eventuell nur entlang Strecken A angebracht werden, welche mit Strecken B wechseln, wo die Webkante 1a des Netzes 1 nicht an das Band 2b des Reißverschlusses 2 angenäht ist (Fig. 6). In diesem Fall haben die Strecken A der Nähte immerhin eine derartige Länge, dass eine gute gleichmäßige Verteilung der Belastungen auf die Netze stattfindet, während an den Strecken B das Netz, unter der Last eventuellen Hagels, sich frei nach unten, zwecks Entladung des Hagels, ohne Behinderung seitens nach oben stehender Ränder 1 c, 2c, verformen C kann. Die besagten Nähte entlang der Strecken A, unterbrochen durch nahtlose Strecken B, können auch entlang der Webkante des zweiten am selben Reißverschluss befestigten Netzes vorgesehen werden, in diesem Fall sind die Strecken A mit Nähten 4, 4a an einem Netz vorzugsweise versetzt zu den Strecken A mit Naht am zweiten Netz vorgesehen (Fig. 6).

Um zu verhindern, dass die Krampen 2a des Reißverschlusses 2, beim Aufrollen oder Raffen des Netzes 1, zwecks Einnahme der kompakten, nicht aktiven Position, sich im Netz verhängen, schlägt die Erfindung vor, die Reihe der Krampen 2a des Reißverschlusses mittels eines Abdeckbandes 3, eventuell aus elastischem Werkstoff welches, zusammen mit dem Band 2b des Reißverschlusses 2, angenäht ist (Fig. 3), mittels Falten und Vernähen des selben Bandes 2a des Reißverschlusses 2 (Fig. 4) oder mittels Falten und Vernähen der Webkante 1a des Hagelschutznetzes 1 (Fig. 5), zu überdecken, wobei jeweils der gefaltete Teil sich über das besagte Band 2b mit den Krampen 2a legt.

Die besagte Abdeckung der Reihe von Krampen 2a des Reißverschlusses 2 bewirkt, dass der angebrachte überdeckende Teil 3, 2a, 1a, beim

Aufrollen oder Raffen des Hagelschutznetzes 1, in Bezug zum Netzgewebe 1 b, sich dazwischenlegt um das unerwünschte Einhängen der Krampen 2a des Reißverschlusses 2 in die Maschen den Netzes 1 zu verhindern.

In der aktiven, ausgebreiteten Position des Netzes 1 hingegen schützt die besagte Abdeckung der Krampen 2a des Reißverschlusses 2 letztere gegen die Ablagerung von Pflanzenschutzmitteln.

Um an den einzelnen Netzen 1 eine gleichmäßige Verteilung der Belastungen zu erreichen, können die Bänder 2b des Reißverschlusses 2 und/oder die Webkante 1 a des Netzes 1 aus elastischem oder gummiertem Gewebe sein, ohne auszuschließen, dass mittels der selben Nähte, zwischen Reißverschluss und Netz, ein oder mehrere Bänder aus elastischem Werkstoff angebracht werden können. Die Gummierung der Gewebe und/oder der Einsatz eines elastischen Bandes oder mehrerer elastischer Bänder bewirkt, außer der gleichmäßigen Verteilung der Belastungen, die dichte Einschließung des Großteils der Fäden der Nähte, wodurch diese gegen Chemikalien und direkte Sonnenbestrahlung geschützt sind.

Vorzugsweise werden an jenen Bändern 2b des Reißverschlusses 2, wo das Netz 1 nur entlang begrenzter Strecken A vernäht ist um an den dazwischen angeordneten nicht vernähten Strecken B die Verformung C des Netzes und das Entladen D des Hagels in Richtung Boden zu ermöglichen, das Band 2b so über die Webkante 1 a gelegt und vernäht, dass die Krampen 2a des Reißverschlusses 2 auf der gegenüberliegenden Seite, bezogen auf das Netz 1, liegen. In diesem Fall wird vorgeschlagen eine erste Heftnaht 5 anzulegen um die Position des Reißverschlusses zu definieren und um diesen anschließend, ohne Faltenbildung, durch eine zweite Naht 5a festnähen zu können. In diesem Fall sind beide Nähte 5, 5a Kettelnähte und die Nahtenden werden jeweils durch eine Quernaht 5b gegen Aufgehen gesichert. Die Praxis hat gezeigt, dass diese Quernähte 5b, ohne das Gewebe zu beschädigen oder zu schwächen die Haltbarkeit der Nähte 5, 5a dauerhaft sichern.

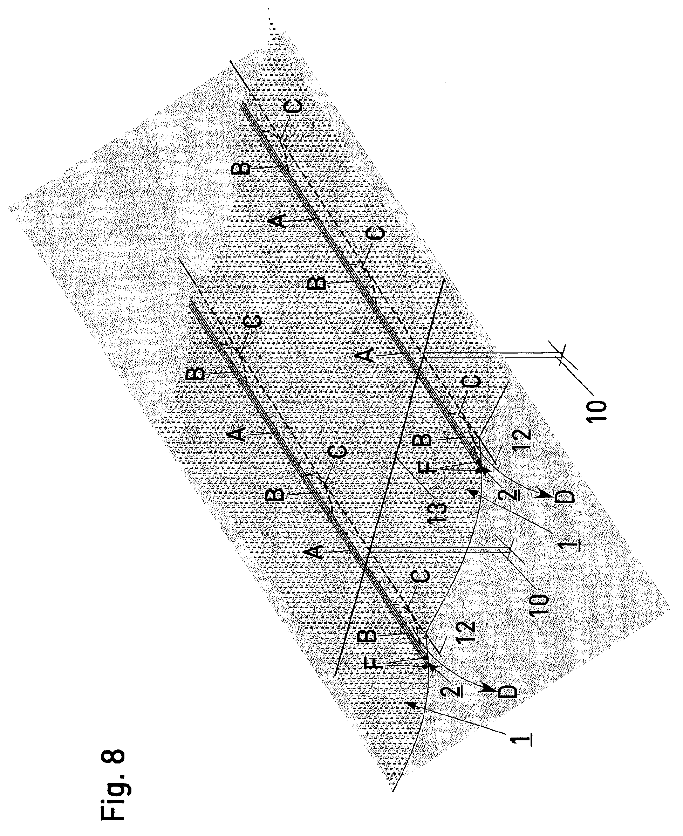

In einer erfindungsgemäßen Abdeckanlage sind die Reißverschlüsse 2 mit den ein- oder beidseitigen Entladungsöffnungen in jedem der Längsbahnen der Abdeckung zwischen den Pflanzenreihen entlang der "Traufenlinie" angeordnet. Diese "Traufenlinie" ist bei Netzen welche nach Art geneigter Dachflächen angeordnet sind, klar definiert, während diese Linie bei flachen Abdeckungen auf ebenem Gelände entlang der Mittellinie zwischen den Pflanzen- oder Pfahlreihen verläuft. In Hanglagen läuft hingegen diese Linie talseitig versetzt entlang der tiefsten durchhängenden Bereiche des Netzes; nur bei dieser Anordnung des Reißverschlusses ist eine effiziente Entladung D des Hagels gegeben. Bei der Definition der "Traufenlinie" sollten auch die vorherrschende Wind- und Gewitterrichtung beachtet werden. Bei Anlagen mit einseitigen Entladungsöffnungen müssen diese immer auf der tiefer gelegenen Seite vorgesehen sein (Fig. 8).

Erfindungsgemäß ist es bei Hanglagen, im Fall von Entladungsbereichen C für den Hagel längs jeweils nur einer Seite der Reißverschlüsse, vorteilhaft, an der Längsseite ohne Entleerungsbereiche C, für die Verbindung zwischen Webkante 1a und Band 2b des Reißverschlusses 2, eine Heftnaht 4 mit Überwendlingsnaht 4a vorzusehen damit der Hagel ohne Behinderung durch aufstehende Ränder 1c, 2c quer über den Reißverschluss 2 in Richtung Entladungsbereiche C auf die an der Seite des Reißverschlusses gleiten kann. Dies schließt nicht aus, dass bei Bedarf auch an der Längsseite des Reißverschlusses mit den Nähten 4, 4a diese Nähte auf Strecken A begrenzt werden um an den dazwischen angeordneten Strecken B Durchlässe für die Entladung C des Hagels zu schaffen.

Die erfindungsgemäße Abdeckanlage wird auf eine bekannte Stützstruktur montiert, diese besteht aus zueinander beabstandeten Reihen vertikaler Stützpfählen 10 über deren Abdeckkappen an den oberen Pfahlenden, Längsdrähte 12 gespannt werden welche an ihren Enden an Bodenankern 11 befestigt sind. Über die selben Abdeckkappen der Pfähle 10 sind, quer zu den Pfahlreihen (ca. 90°), Querdrähte 13 gespannt. Nur die Längsdrähte 12 werden von den Netzen 1 abgedeckt, diese werden auch als "Firstdrähte" bezeichnet. Die Querdrähte 13 hingegen werden von den Netzen 1 nicht überdeckt sondern verlaufen frei oberhalb der Netze. Die äußersten Querdrähte am Anfang und am Ende der Pflanzenreihen werden als Stirndrähte 13a bezeichnet und dienen zur Befestigung und/oder Umlenkung der jeweiligen Enden der einzelnen Netzbahnen. Zwecks gleichmäßiger Verteilung der Spannung der einzelnen Netzbahnen, sowie der Belastungskräfte bei Hagelschlag und auch um ein hemmungsloses Schließen und Öffnen der Reißverschlüsse infolge unterschiedlicher Belastungen zu sichern, erfolgt erfindungsgemäß die Montage der Netze wie folgt:
- Demontage eventueller vertikaler Beregnungsrohre oder Teile welche die Netzabdeckung durchdringen würden,
- Auflegen der Netzbahnen 1 samt den Bändern der Reißverschlüsse 2 auf die Längsdrähte 12, so dass die Netzbahnhälften links und rechts vom jeweiligen Längsdraht 12 gleich verteilt sind.
- Ausrichten der Netzbahnen 1 in Längsrichtung und Fixieren F der Enden des jeweiligen Reißverschlusses 2 am Stirndraht 13a,
- Schließen der Reißverschlüsse 2 und Fixieren der Reißverschlussschlitten unter Spannung am gegenüberliegenden Stirndraht 13a,
- Spannen der Netze 1 ohne Befestigung am jeweiligen Firstdraht 12,
- Befestigung der Netze an den Firstdrähten 12 und/oder an den Abdeckkappen der Stützpfähle 10,
- Montage der Beregnungsrohre oder der Teile welche die gespannte Netzabdeckung durchdringen.

Eine Montage der Netzbahnen nach bekanntem Ablauf der Arbeitsphasen sieht das vorherige Befestigen der Netzbahnen an den Firstdrähten 12 vor, dies würde bei den erfindungsgemäßen Netzabdeckungen zu sehr unterschiedlichen Spannungen an den Reißverschlüssen führen welche, durch mehrmaliges Summieren dieser Spannungen an mehreren Netzbahnen, das Schließen zumindest eines Teiles der Reißverschlüsse verhindern würde, bzw. zu mangelhafter Spannung und zum Durchhängen von Netzbahnen führen würde; im letzteren Fall wäre das effiziente Entladen D des Hagels nicht mehr gegeben.

## Patentansprüche

1. Verbindungssystem mittels Reißverschluss für Hagelschutznetze und ähnliche Abdeckungen wobei die Bänder (2b) des Reißverschlusses (2) entlang der Ränder der Längswebkanten (1 a) der Hagelschutznetze (1) vernäht sind, **dadurch gekennzeichnet, dass** die Bänder (2b) des Reißverschlusses (2) an den entsprechenden Webkanten (1a) der Hagelschutznetze (1) anliegend, durch jeweils eine erste Heftnaht (4, 5) und eine dazu parallele, beabstandete, zweite Überwendlingsnaht (4a) oder Kettelnaht (5a) über die gesamte Länge durchgehend vernäht sind oder über Strecken (A) vernäht sind welche mit Strecken (B) ohne Nahtverbindungen abwechseln, dass an den nähtefreien Strecken (B) jeweils beide Enden dieser Nähte (4, 4a; 5, 5a) durch mindestens eine Quernaht (5b) gegen selbsttätiges Aufgehen gesichert sind und dass an den nähtefreien Strecken (B), bei unter Spannung (T) stehenden Netzen (1), das Abgleiten des Hagels, zwischen dem Band (2b) des Reißverschlusses (2) und der entsprechenden freien Webkante (1a) des Netzes, nicht durch abstehende Ränder (1c, 2c) des besagten Bandes (2b) oder der Webkante (1a) behindert wird.

2. Verbindungssystem mittels Reißverschluss für Hagelschutznetze und ähnliche Abdeckungen gemäß Anspruch 1, **dadurch gekennzeichnet, dass** die Webkante (1a) eines der Netze (1), längs einer Seite des Reißverschlusses (2) am Band (2b) des Reißverschlusses mittels einer erste Kettelnaht (5) als Heftnaht und mittels einer zweiten Kettelnaht (5a) an der Unterseite des Bandes (2b) so angebracht ist, dass die äußersten Ränder (1c, 2c) der Webkante des Netzes und des Bandes des Reißverschlusses nicht von der Ebene des unter Zug (T) belasteten Netzes von der Ebene des Netzes abstehen und dass die zwei besagten Nähte (5, 5a) sich über begrenzte Strecken (A) erstrecken welche mit nahtlosen Strecken (B) wechseln, während an der gegenüberliegenden Längsseite des selben Reißverschlusses (2) das Netz (1) mittels einer ersten Kettelnaht (4) als Heftnaht und einer anschießend angebrachten Überwendlingsnaht (4a) so befestig ist, dass die äußersten Ränder (1c, 2c) der Webkante des Netzes und des Bandes des Reißverschlusses von der Ebene des unter Zug (T) belasteten Netzes nach unten, gegen den Boden abragen damit am entsprechenden Bereich der Hagel ohne Behinderung quer über diese Verbindungsstelle und den Reißverschluss gleiten kann.

3. Verbindungssystem mittels Reißverschluss für Hagelschutznetze und ähnliche Abdeckungen gemäß Anspruch 1, **dadurch gekennzeichnet, dass** der Bereich der Reihe von Krampen (2a) des Reißverschlusses (2) durch ein Band (3) abgedeckt ist welches, zusammen mit dem Band (2b) des Reißverschlusses (2), an der Webkante (1a) des Hagelschutznetzes (1) angenäht (4, 4a; 5, 5a) ist.

4. Verbindungssystem mittels Reißverschluss für Hagelschutznetze und ähnliche Abdeckungen gemäß Anspruch 1, **dadurch gekennzeichnet, dass** der Bereich der Reihe von Krampen (2a) des Reißverschlusses (2) durch das selbe Band (2b) des Reißverschlusses abgedeckt ist welches in Längsrichtung gefaltet ist und in zusammengefalteter Position an der Webkante (1a) des Hagelschutznetzes angenäht (4, 4a; 5, 5a) ist.

5. Verbindungssystem mittels Reißverschluss für Hagelschutznetze und ähnliche Abdeckungen gemäß Anspruch 1, **dadurch gekennzeichnet, dass** der Bereich der Reihe von Krampen (2a) des Reißverschlusses (2) von der selben Webkante (1a) des Hagelschutznetzes (1) abgedeckt ist welche in Längsrichtung gefaltet ist, wobei die Nähte (4, 4a; 5, 5a) die beiden zusammengefalteten Teile der Webkante, zusammen mit dem dazwischengelegten Band (2b) des Reißverschlusses, fixieren.

6. Verbindungssystem mittels Reißverschluss für Hagelschutznetze und ähnliche Abdeckungen gemäß Anspruch 1, **dadurch gekennzeichnet, dass** das Band (2b) des Reißverschlusses (2) mindestens teilweise aus elastischem oder aus gummiertem Gewebe besteht.

7. Verbindungssystem mittels Reißverschluss für Hagelschutznetze und ähnliche Abdeckungen gemäß Anspruch 1, **dadurch gekennzeichnet, dass** die Webkante (1a) des Netzes (1) mindestens teilweise aus elastischem oder gummiertem Gewebe besteht.

8. Verbindungssystem mittels Reißverschluss für Hagelschutznetze und ähnliche Abdeckungen gemäß Anspruch 1, **dadurch gekennzeichnet, dass** im Bereich der Nähte (4, 4a; 5, 5a), zwischen den Bändern (2b) und den Webkanten (1a) der Hagelschutznetze (1), anschließend an den besagten Bändern und den entsprechenden Webkanten, ein Band aus elastischem Werkstoff mit den selben Nähten befestigt ist.

9. Montageverfahren zur Erstellung von Abdeckanlagen bestehend aus Hagelschutznetzen oder aus ähnlichen Abdeckungen welche aus, durch Reißverschlüsse, gemäß Anspruch 1 verbundenen, Netz- oder Gewebebahnen zusammengesetzt sind und an einer bekannten Stützstruktur aus, zueinander beabstandeten Reihen vertikaler Stützpfählen (10) mit Abdeckkappen und aus, über deren Abdeckkappen gespannten, an ihren Enden am Boden verankerten (4), Längsdrähte (12) und Querdrähte (13) bzw. Stirndrähten (13a) besteht, befestigt sind, **dadurch gekennzeichnet,**
- **dass** vor der Auflage der Netze (1) oder Abdeckbahnen alle eventuellen Vorrichtungen oder Teile der Anlage welche im Endzustand der Anlage die Netze (1) durchdringenden würden, entfern werden,
- **dass** anschließend die Netzbahnen (1) samt den angenähten Bändern (2b) der Reißverschlüsse (2) auf die Längsdrähte (12) so aufgelegt werden, dass die Netzbahnhälften links und rechts vom jeweiligen Längsdraht gleich verteilt sind,
- **dass** darauf folgend die Netzbahnen (1) in Längsrichtung ausgerichtet und die Enden des jeweiligen Reißverschlusses (2) am Stirndraht (13a) fixiert (F) werden,
- **dass** anschließend die Reißverschlüsse (2) geschlossen werden und die Reißverschlussschlitten unter Spannung am gegenüberliegenden Stirndraht (13a) fixiert werden,
- **dass** anschließend die Netze (1), ohne Befestigung an den Firstdrähten, gespannt werden,
- **dass** anschließend die Netze (1) an den Firstdrähten (12) und/oder an den Abdeckkappen der Stützpfähle (10) befestigt werden,
- und **dass** anschließend eventuelle Beregnungsrohre oder die Teile welche die gespannte Netzabdeckung durchdringen, montiert werden.

## Claims

1. A connecting system by means of a zipper for hail protection nets and similar covers, wherein the straps (2b) of the zipper (2) are sewed along the edges of the longitudinal selvages (1a) of the hail protection nets (1), **characterized in that** the straps (2b) of the zipper (2), which abut against the corresponding selvages (1a) of the hail protection nets (1), are all sewed consistently by a first basting seam (4, 5) and a parallel, spaced second overlock seam (4a) or looping seam (5a) over the entire length or are sewed over segments (A) which alternate with segments (B) without seam connections, that in the seam-free segments (B) the two ends of each of these seams (4, 4a; 5, 5a) are secured against automatic unstitching by at least one cross-seam (5b) and that in the seam-free segments (B) the hail is not prevented, in the case of tensioned (T) nets (1), from sliding off between the strap (2b) of the zipper (2) and the corresponding free selvage (1a) of the net by projecting edges (1c, 2c) of said strap (2b) or said selvage (1a).

2. The connecting system by means of a zipper for hail protection nets and similar covers according to claim 1, **characterized in that** the selvage (1a) of one of the nets (1) is fixed along a side of the zipper (2) at the strap (2b) of the zipper by means of a first looping seam (5) as a basting seam and by means of a second looping seam (5a) on the bottom side of the strap (2b) in such a way that the outermost edges (1c, 2c) of the selvage of the net and of the strap of the zipper do not project from the plane of the tensioned (T) net beyond the plane of the net and that said two seams (5, 5a) extend over limited segments (A) which alternate with seamless segments (B), while on the opposite longitudinal side of the same zipper (2), the net (1) is attached by means of a first looping seam (4) as a basting seam and a subsequently attached overlock seam (4a) in such a way that the outermost edges (1c, 2c) of the selvage of the net and of the strap of the zipper protrude from the plane of the tensioned (T) net downwards, towards the ground, in order that in the corresponding region the hail can slide without impediment transversely over this connecting point and the zipper.

3. The connecting system by means of a zipper for hail protection nets and similar covers according to claim 1, **characterized in that** the region of the row of teeth (2a) of the zipper (2) is covered by a strap (3) which, together with the strap (2b) of the zipper (2), is sewed (4, 4a; 5, 5a) to the selvage (1a) of the hail protection net (1).

4. The connecting system by means of a zipper for hail protection nets and similar covers according to claim 1, **characterized in that** the region of the row of teeth (2a) of the zipper (2) is covered by the same strap (2b) of the zipper, which is folded in the longitudinal direction and in the folded position is sewed (4, 4a; 5, 5a) to the selvage (1a) of the hail protection net.

5. The connecting system by means of a zipper for hail protection nets and similar covers according to claim 1, **characterized in that** the region of the row of teeth (2a) of the zipper (2) is covered by the same selvage (1a) of the hail protection net (1), which is folded in the longitudinal direction, wherein the seams (4, 4a; 5, 5a) fix the two folded parts of the selvage together with the intermediate strap (2b) of the zipper.

6. The connecting system by means of a zipper for hail protection nets and similar covers according to claim 1, **characterized in that** at least part of the strap (2b) of the zipper (2) is composed of elastic or rubber-coated fabric.

7. The connecting system by means of the zipper for hail protection nets and similar covers according to claim 1, **characterized in that** at least part of the selvage (1a) of the net (1) consists of elastic or rubber-coated fabric.

8. The connecting system by means of a zipper for hail protection nets and similar covers according to claim 1, **characterized in that** in the region of the seams (4, 4a; 5, 5a), a strap of elastic material is fixed to the same seams between the straps (2b) and the selvages (1a) of the hail protection nets (1), adjacent to said straps and the corresponding selvages.

9. A mounting method for building covering systems consisting of hail protection nets or of similar covers, which are assembled from net or fabric webs connected according to claim 1 by zippers and are attached to a known supporting structure consisting of spaced rows of vertical supporting posts (10) by means of cover caps and of longitudinal wires (12) and transverse wires (13) and/or end wires (13a), which are stretched over the cover caps thereof and, at the ends thereof, are anchored (4) in the bottom, **characterized in**
- **that** prior to attaching the nets (1) or the cover webs all possible devices or parts of the system which would penetrate the nets (1) in the final state of attachment are removed,
- **that** then the net webs (1) plus the sewed straps (2b) of the zippers (2) are placed on the longitudinal wires (12) in such a way that the net web halves are equally spread on the left-hand and right-hand sides of the respective longitudinal wire,
- **that** thereafter the net webs (1) are aligned in the longitudinal direction and the ends of the respective zipper (2) are fixed (F) to the front wire (13a),
- **that** the zippers (2) are subsequently closed and the zipper sliders are fixed to the opposite front wire (13a) in tensioning fashion,
- **that** then the nets (1) are tensioned without attachment to the top wires,
- **that** thereafter the nets (1) are attached to the top wires (12) and/or to the cover caps of the supporting posts (10),
- and **that** possible irrigation pipes or the parts which penetrate the tensioned net cover are subsequently installed.

## Revendications

1. Système de connexion à fermeture éclair pour des filets anti-grêle et couvertures analogues, les bandes (2b) de la fermeture éclair (2) étant cousues (1) le long des bords des lisières longitudinales (1a) des filets anti-grêle, **caractérisé en ce que** les bandes (2b) de la fermeture éclair (2), contiguës aux lisières correspondantes (1a) des filets anti-grêle (1), sont cousues, en continu et sur toute leur longueur, respectivement par une première couture de faufilage (4, 5) et une deuxième couture de surjet (4a) ou de remaillage (5a) parallèle et espacée par rapport à la première, ou cousues sur des longueurs (A) alternant avec des longueurs (B) sans coutures de raccord, de manière à ce que, au niveau des longueurs sans coutures (B), chacune des deux extrémités de ces coutures (4, 4a ; 5, 5a) soit arrêtée au moins par une couture transversale (5b) pour éviter que la couture ne s'ouvre d'elle-même, et de manière à ce que, au niveau des longueurs sans coutures, lorsque les filets (1) sont soumis à une tension (T), la grêle puisse glisser entre la bande (2b) de la fermeture éclair (2) et la lisière libre correspondante (1a) du filet (1) sans être entravée par les bords surélevés (1c, 2c) de ladite bande (2b) ou de la lisière (1a).

2. Système de connexion à fermeture éclair pour des filets anti-grêle et couvertures analogues selon la revendication 1, **caractérisé en ce que** la lisière (1a) d'un des filets (1) est fixée, le long d'un côté de la fermeture éclair (2) sur la bande (2b) de la fermeture éclair (2) par une première couture de remaillage (5) faisant office de couture de faufilage et par une deuxième couture de remaillage (5a) sur la partie inférieure de la bande (2b) de sorte que les bords les plus extérieurs (1c, 2c) de la lisière du filet et de la bande de la fermeture éclair restent sur le même plan que le filet sous tension (T) et que le filet, et que les deux coutures susmentionnées (5, 5a) s'étendent sur des longueurs (A) limitées alternant avec des longueurs (B) sans coutures, tandis que, au niveau du coté longitudinal opposé de la même fermeture éclair (2), le filet (1) est fixé par une première couture de remaillage (4) faisant office de couture de faufilage et une couture de surjet (4a) adjacente, de manière à ce que les bords les plus extérieurs (1c, 2c) de la lisière du filet et de la bande de la fermeture éclair, sortent du plan du filet sous tension (T), vers la bas, en direction du sol, afin que, dans la zone correspondante, la grêle puisse glisser transversalement sur cette zone de raccord et sur la fermeture éclair sans être entravée.

3. Système de connexion à fermeture éclair pour des filets anti-grêle et couvertures analogues selon la revendication 1, **caractérisé en ce que** la zone de la série de crans (2a) de la fermeture éclair (2) est recouverte par un bande (3) qui, avec la bande (2b) de la fermeture éclair (2), est cousue (4, 4a ; 5, 5a) sur la lisière (1a) du filet anti-grêle (1).

4. Système de connexion à fermeture éclair pour des filets anti-grêle et couvertures analogues selon la revendication 1, **caractérisé en ce que** la zone de la série de crans (2a) de la fermeture éclair (2) est recouverte par la même bande (2b) de la fermeture éclair (2), laquelle est pliée dans le sens longitudinal et cousue (4, 4a ; 5, 5a), dans sa position pliée, sur la lisière (1a) du filet anti-grêle.

5. Système de connexion à fermeture éclair pour des filets anti-grêle et couvertures analogues selon la revendication 1, **caractérisé en ce que** la zone de la série de crans (2a) de la fermeture éclair (2) est recouverte par la même lisière (1a) du filet anti-grêle, laquelle est pliée dans le sens longitudinal, les coutures (4, 4a ; 5, 5a) venant fixer les deux parties pliées de la lisière conjointement avec la bande (2b) intercalée de la fermeture éclair.

6. Système de connexion à fermeture éclair pour des filets anti-grêle et couvertures analogues selon la revendication 1, **caractérisé en ce que** la bande (2b) de la fermeture éclair (2) se compose au moins en partie d'un tissu élastique ou caoutchouté.

7. Système de connexion à fermeture éclair pour des filets anti-grêle et couvertures analogues selon la revendication 1, **caractérisé en ce que** la lisière (1a) du filet (1) se compose au moins en partie d'un tissu élastique ou caoutchouté

8. Système de connexion à fermeture éclair pour des filets anti-grêle et couvertures analogues selon la revendication 1, **caractérisé en ce que**, dans la zone des coutures (4, 4a ; 5, 5a), entre les bandes (2b) et les lisières (1a) des filets anti-grêle (1), une bande en matière élastique est fixée de manière adjacente aux dites bandes et aux lisières correspondantes.

9. Procédé de montage pour la mise en place des installations de couverture composé de filets anti-grêle ou de couvertures analogues, composés de lés en tissu ou en filet assemblés selon la revendication 1 par des fermetures éclairs, et fixés à une structure support connue constituée de rangées espacées de poteaux supports (10) verticaux avec capuchons de protection, et de câbles longitudinaux (12) et transversaux (13) ou frontaux (13a) tendus sur ces capuchons de protection et ancrés dans le sol (4) à leurs extrémités, **caractérisé en ce que**
- avant la mise en place des filets (1) ou des lés de couverture, tous les dispositifs ou éléments de l'installation risquant, en position finale de l'installation, de pénétrer dans les filets, sont retirés,
- ensuite, les lés du filet (1), y compris les bandes cousues (2b) des fermetures éclairs (2), sont placés sur les câbles longitudinaux (12) de sorte que les moitiés de filet soit également réparties à gauche et à droite du câble longitudinal correspondant,
- ensuite, les lés du filet (1) sont orientés dans le sens longitudinal et les extrémités de la fermeture éclair (2) correspondante sont fixées (F) sur le câble frontal (13a),
- ensuite, les fermetures éclair (2) sont fermées et les curseurs des fermetures éclair sont fixés sous tension au câble frontal (13a) opposé,
- ensuite, les filets (1) sont tendus sans fixation aux câbles de faîte (12),
- ensuite, les filets (1) sont fixés aux câbles de faîte (12) et/ou aux capuchons de protection des poteaux supports (10),
- pour finir, les éventuelles conduites d'irrigation ou les éléments pénétrant la couverture en filet tendue sont montés.
